(19) Europäisches Patentamt
European Patent Office
Office européen des brevets

(11) Publication number: **0 036 456**
**B1**

(12) **EUROPEAN PATENT SPECIFICATION**

(45) Date of publication of patent specification: **10.07.85**

(51) Int. Cl.[4]: **C 08 L 81/02,** C 08 K 5/10

(21) Application number: **80300860.6**

(22) Date of filing: **20.03.80**

(54) **Elastomer compositions derived from thiodiethanol having reduced odour and increased thermal stability, and process for their preparation.**

(43) Date of publication of application:
**30.09.81 Bulletin 81/39**

(45) Publication of the grant of the patent:
**10.07.85 Bulletin 85/28**

(84) Designated Contracting States:
**BE CH DE FR GB IT NL**

(56) References cited:
**US-A-3 755 462**
**US-A-3 985 708**
**US-A-4 094 859**

(73) Proprietor: **AMERICAN CYANAMID COMPANY**
**Berdan Avenue**
**Wayne New Jersey 06904 (US)**

(72) Inventor: **Toothil, Richard Boardman**
**16 Sunrise Drive**
**Warren New Jersey (US)**
Inventor: **Megna, Salvatore Ignazio**
**Woods Road, R.D. 2**
**Lebanon New Jersey (US)**
Inventor: **Chaudhuri, Ajit Kumar**
**280 River Road**
**Piscataway New Jersey (US)**
Inventor: **Aloia, Romeo Raymond**
**259 Short Hills Drive**
**Bridgewater New Jersey (US)**

(74) Representative: **Allam, Peter Clerk et al**
**LLOYD WISE, TREGEAR & CO. Norman House**
**105-109 Strand**
**London WC2R 0AE (GB)**

EP 0 036 456 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

It is very well-known that thiodiethanol, by virtue of having hydroxyl groups attached to carbon atoms situated beta to a sulfur atom in an aliphatic chain, exhibits unusual reaction activity. Unlike alkanediols, e.g., 1,4-butanediol, thiodiethanol quite readily undergoes an auto-condensation reaction under the influence of heat and certain acidic dehydration catalysts, such as hydrogen chloride. Low molecular weight, rubber-like materials, as indicated in the following reaction scheme, are obtained:

$$(n+1)\ S(C_2H_4OH)_2 \xrightarrow{H^+} HO[C_2H_4SC_2H_4O]_n\ C_2H_4SC_2H_4OH+nH_2O$$

The acid catalyzed auto-condensation of thiodiethanol with hydrochloric acid and phosphorus pentoxide, and the co-condensation with other aliphatic hydroxyl compounds has been studied. Hydrochloric acid catalyst provided low-molecular-weight, waxy, water-soluble polymers and ring-closed by-products, e.g., thioxane and dithiane, while phosphorus pentoxide catalyst afforded products ranging from viscous liquids to rubbery waxes. Some indication of co-condensation with diethylene glycol, trimethylene glycol, and butylene glycols was found. However, no useful rubbery products were produced.

Thiodiethanol has also been copolymerized with equimolar amounts of 1,6-hexanediol, in the presence of p-toluenesulfonic acid catalyst to give low-molecular-weight, waxy polymers; with triethylene glycol, 1,6-hexanediol and trimethylolpropane in the presence of phosphorous acid catalyst to give low-molecular-weight polymers useful as polyurethane intermediates and with thiodipropionic acid catalyst to give hydroxyl-terminated, low-molecular-weight polymers suitable for polyurethanes. These products have been reacted with aromatic diisocyanates to provide polyurethane elastomers.

Sulfur-vulcanizable elastomers, based on the condensation of thiodiethanol with one or more aliphatic diols containing a sulfur-vulcanizable double bond, are described by Aloia, U.S. Patent 3,951,927; Chang et al., U.S. Patent 3,985,708; Chang, U.S. Patent 4,000,213; and Li et al., U.S. Patent 4,028,305.

All of the known polymers of polythiodiethanol derived by an acid catalyzed condensation are, to a greater or lesser degree, malodorous. This odor, which can be quite repugnant, is believed to be attributable to the ring closed by-products, thioxane and dithiane, produced during the condensation. The degree of ring closed by-product formation can be reduced to some extent by a prudent choice of acid catalyst, phosphorous acid being one of the best in this respect. However, in any case, useful rubbery products, exhibiting outstanding physical properties, are obtained from thiodiethanol, but these products have not achieved more than limited success in the marketplace because of their characteristic malodor.

Additionally, the sulfur-vulcanizable polymers described above exhibit outstanding properties. However, the vulcanized elastomers produced therefrom are not as thermally stable as desired, i.e., they suffer loss of properties (tensile strength, elongation) on aging at elevated temperatures. One of the most serious disadvantages of the thermal instability is manifested by high compression-set properties.

### Summary of the invention

The present invention is based on the discovery that the odor characteristic of condensation polymers of thiodiethanol can be substantially reduced to acceptable levels, if not totally eliminated, by the incorporation therein of a salt of certain metals at one or more stages of the elastomer preparation and that the thermal stability of sulfur vulcanized elastomers can be increased by adding copper salts thereto.

Chang in U.S. Patent 4,094,859 discloses a novel catalyst system in the preparation of linear, high molecular weight elastomeric polymers of thiodiethanol. More particularly, Chang discloses a process for the preparation of such an elastomer which comprises condensing a monomer charge comprising thiodiethanol or a major proportion of thiodiethanol with (A) one or more saturated or unsaturated aliphatic diols, or (B) one or more dihydric phenolic compounds, or (C) mixtures of (A) and (B), at a temperature in the range of 150° to 200°C, under conditions whereby water formed in the reaction is removed and in the presence of a catalyst comprising from 0.01 to 3 percent by weight, based on the weight of monomer charge, of phosphorous acid and from 0.01 to 3 percent by weight, based on the weight of monomer charge, of manganese, iron, cobalt, nickel, copper or zinc sulfate.

Although Chang is solely concerned with the reaction rate-enhancing effect of using manganese, iron, cobalt, nickel, copper and zinc sulfate co-catalysts with phosphorous acid catalyst, nevertheless it is possible, although not inevitable, that in some instances a thiodiethanol elastomer produced in accordance with the Chang process will contain a sufficient residual amount of a suitable metal sulfate co-catalyst to cause a substantial reduction in the malodor of the resulting elastomer. Similarly, if the co-catalyst is copper sulfate, there may be an improvement in the thermal stability of the elastomer.

Accordingly, there are excluded from the present invention thiodiethanol polymer compositions having incorporated therein manganese, iron, cobalt, nickel, copper or zinc sulfate.

### Description of the invention including preferred embodiments

#### A. The metal salts

Metal salts which have been found to substantially reduce the malodor of polymers of thiodiethanol according to the invention hereof are those capable of complexing with the odor producing components of

the thiodiethanol polymers which are produced during the polymer production. Any metal salt which performs this function can be used in accordance with the instant invention. Those salts found particularly useful include the salts of metals appearing in Groups IB, IIB and VIII of Mendeleeff's Periodic Table of the Elements, notably copper, silver, nickel, zinc, cadmium, mercury, iron and cobalt.

The preferred metal salts are copper and zinc salts; useful anions are halides (especially chlorides), sulfates, nitrates, and aliphatic carboxylic acid salts. Other salts, such as the carbonates, thiocyanates, sulfides, oxides and certain organometal compounds, such as copper acetyl acetonate and cupric ethylacetoacetate, also reduce the odor. Additionally, these copper salts, when added to the sulfur-vulcanizable materials, result in vulcanized elastomers of increased thermal stability.

Although not wishing to be bound by any specific theory, it is believed that the method by which the various metal salts function to reduce malodor in polymers of thiodiethanol is through complex formation with thioxane and dithiane which are believed to cause the malodor, as mentioned above. The resulting complexes have significantly reduced odor and, depending on the thermal stability of the complex formed, control the odor even during processing of the polymer at elevated temperatures. Although some of the metal salts may discolor the polymers to some extent, which may, in some instances, be undesirable from a use standpoint, the metal salts are all effective to the extent that they reduce the malodor relative to that of the untreated polymer per se. Copper and zinc salts are preferred because they are the most effective in reducing malodor and also because they produce little or no discoloration in the polymer.

Useful metal salts include, but are not limited to, the following:
cupric chloride (bromide, iodide)
cupric acetate
cupric sulfate
cupric nitrate
cupric formate
cupric stearate
cupric carbonate
cupric octoate
cupric naphthenate
cupric acetyl acetonate
cupric ethylacetoacetate
cuprous chloride (bromide, iodide)
cuprous oxide
cuprous sulfide
cuprous thiocyanate
zinc chloride (bromide, iodide)
zinc acetate
zinc carbonate
zinc formate
zinc nitrate
zinc phosphate
zinc sulfate
zinc sulfide
cobaltic chloride (bromide, iodide)
cobaltic oxide
cobaltic sulfate
cobaltic sulfide
cobaltous chloride (bromide, iodide)
cobaltous acetate
cobaltous carbonate
cobaltous nitrate
cobaltous oxalate
cobaltous oxide
cobaltous sulfate
cobaltous sulfide
ferric chloride (bromide, iodide)
ferric acetate
ferric formate
ferric nitrate
ferric oxalate
ferric oxide
ferric sulfate
ferrous chloride (iodide, bromide)
ferrous acetate
ferrous carbonate

ferrous formate
ferrous nitrate
ferrous oxalate
ferrous oxide
ferrous sulfate
nickel chloride (bromide, iodide)
nickel acetate
nickel carbonate
nickel formate
nickel nitrate
nickel oxalate
nickel oxide
nickel phosphate
nickel sulfate
silver chloride (bromide, iodide)
silver acetate
silver nitrate
silver oxalate
silver oxide
silver sulfate
mercurous chloride (bromide, iodide)
mercurous acetate
mercurous nitrate
mercurous oxide
mercurous sulfate
mercuric chloride (bromide, iodide)
mercuric acetate
mercuric carbonate
mercuric formate
mercuric nitrate
mercuric oxide
mercuric sulfate
cadmium chloride (bromide, iodide)
cadmium acetate
cadmium carbonate
cadmium formate
cadmium nitrate
cadmium oxide
cadmium sulfate
cadmium sulfide, and the corresponding aluminum, boron, bismuth, ruthenium, rhodium, palladium, osmium, chromium, tin, iridium, platinum, gold etc. salts.

B. The polymers

Thiodiethanol in major amount, i.e., at least about 50 mole percent, condenses with aliphatic saturated diols (linear, branched chain or cyclic) under the influence of heat and acidic dehydration catalysts, such as phosphorous acid, to provide low-molecular-weight, hydroxyl-terminated polyols, hereafter referred to as macroglycols. Thiodiethanol similarly homopolymerizes to form macroglycols if other diols are absent. These condensation reactions are well-known, as described in the aforementioned references. The molecular weights of these macroglycols generally range from about 500 to 4000, but may reach as high as about 8000. The condensation reaction invariably produces, at least to some degree, malodorous by-products, as discussed above. The molodor persists when the macroglycols are converted to elastomeric products. The preferred macroglycols may be characterized by the formula (I):

$$H\!+\!OG\!+_{m}\!OH \qquad (I)$$

wherein $+OG+$ comprises structural units (II) or randomly alternating structural units (II) and (III):

$$+OC_2H_4SC_2H_4+ \qquad (II)$$

$$+OR+ \qquad (III)$$

wherein R represents one or more radicals remaining on removal of two hydroxyl groups from saturated aliphatic linear, branched chain or cyclic diols; m is an integer sufficient to provide in the polymer a molecular weight of up to about 8000 and the molar ratio of structural units (II) to structural units (III) in the copolymers is not less than about 1:1.

The macroglycols (I) may be converted into useful elastomeric products in one of the following ways:

(1) The macroglycol may be reacted with a stoichiometric excess of a diisocyanate, preferably an aromatic diisocyanate such as tolylene diisocyanate or methylenebis (phenyl isocyanate) to provide isocyanate-terminated interpolymers, usually referred to in the art as prepolymers, having isocyanate contents ranging from about 2 to 10%. The prepolymer can then be reacted (chain-extended) with an aromatic diamine, such as methylenebis (o-chloroaniline), or a diol, such as the di-hydroxyethyl ether of hydroquinone. These reaction products are the so-called castable polyurethanes. When they are cured by heat in a mold, useful elastomeric products are obtained.

(2) The macroglycol may be reacted with one or more aliphatic diols, e.g., 1,4-butanediol, and an aromatic diisocyanate in a manner such that the ratio of isocyanate groups to the total hydroxyl groups of the macroglycol plus diol is essentially 1:1 (i.e., about 0.95:1 to 1.05:1) to produce a thermoplastic polyurethane elastomer. Ordinarily a catalyst is used to promote the reaction, e.g., certain tin compounds. Thermoplastic elastomers may also be obtained by reacting the above mentioned isocyanate-terminated prepolymers with an aliphatic diol at essentially stoichiometric levels, optionally in the presence of a catalyst.

Sulfur-vulcanizable elastomers of thiodiethanol are represented by the Formula (IV):

$$H{+}OP{+}_xOH \qquad (IV)$$

wherein $+OP+$ comprises randomly alternating structural units selected from:

(A) structural units (II) above, and (V)

$$+OR'+ \qquad (V)$$

wherein R′ is one or more radicals remaining on removal of two hydroxyl groups from (a) saturated aliphatic linear, branched chain or cyclic diols, or (b) aliphatic linear, branched chain or cyclic diols containing external unsaturation and having an allylic hydrogen atom; and

(B) structural units (II), above, (V), above, and (VI)

$$+OR''+ \qquad (VI)$$

wherein R″ is one or more radicals remaining on removal of two hydroxyl groups from a diphenolic compound. The polymers comprising structural units (A) and (B) are characterized in that (1) x is an integer sufficient to provide in the polymer a molecular weight of at least about 8000; (2) the molar ratio of structural units (II) to structural units (V) when the polymer comprises structural units (A), or the molar ratio of structural units (II) to the total of structural units (V) and (VI), when the polymer comprises structural units (B), is not less than about 1:1; and (3) the polymers contain from 1 to 10 mole percent of diol (b), based on the total of all units (II), (V) and (VI) present in the polymer.

These polymers are millable gums containing an external, i.e., pendant, double bond which is vulcanizable, e.g. with sulfur, to give useful elastomeric products. Thus, they may be compounded on conventional rubber processing equipment with vulcanizing agents, carbon black, other fillers, processing aids, etc., and cured in a mold at elevated temperatures.

As indicated, all of the polymers of thiodiethanol described herein have some degree of malodor, which is markedly reduced by the addition thereto of a metal salt, as described. The method by which the metal salt is incorporated into the polymer normally is immaterial, however, preferred methods are as follows. When preparing an isocyanate terminated prepolymer, the metal salt is added to the macroglycol, prior to reacting with the diisocyanate, as an aqueous solution. The salt is thoroughly mixed into the macroglycol, and a vacuum is then applied at a temperature over 100°C to remove water. It is possible to add the metal salt to the ultimate prepolymer; however, since water will react with the isocyanate groups, the metal salt must be substantially anhydrous. The preferred procedure is to add the metal salt to the macroglycol.

The same procedure is used when preparing a thermoplastic polyurethane, except in this case the metal salt may be added to the macroglycol or to a mixture of the macroglycol and aliphatic diol.

When the salts are added to the vulcanizable elastomers to decrease their odor or the copper salts are added to increase their thermal stability, it has been found beneficial to first prepare the thiodiethanol-based elastomers by condensing thiodiethanol, or a mixture of a major proportion of thiodiethanol with one or more aliphatic diols, including about 1 to 10 mole percent of an unsaturated diol, optionally with a dihydroxy phenolic compound, in the presence of an acidic dehydrating catalyst, preferably phosphorous acid, at a temperature of about 150 to 200°C until a low-molecular-weight, hydroxyl-terminated polymer is obtained. To this low-molecular-weight polymer is then added an additional catalyst, e.g., sulfuric acid, and the condensation reaction is continued at 175—200°C under vacuum in a high-shear mixer, until the molecular weight exceeds about 8000, and a gum is obtained. The appropriate metal salt is then added to the elastomer following this build-up of its molecular weight to the gum stage. The salt may be added as a powder and mixed into the gum in any convenient manner. Thus, it may be mixed into the gum using a high-shear mixer, a dough (or sigma) mixer, on a rubber mill or in a Banbury mixer. Preferably, the salt is

added at an elevated temperature in order to insure uniform distribution and solubility in the gum. Any temperature above about 50°C up to the condensation temperature is useful, although it is preferable to add the salt at a temperature above 100°C. If the salt is added to the polymer prior to attaining a high-molecular-weight gum, it may interefere with the condensation reaction with the result that a gum is either not readily obtained or the rate of reaction is significantly slowed.

The gum, containing the salt, is then compounded in the same manner as conventional elastomers using standard rubber compounding techniques and cured in the conventional manner, preferably using one of the sulfur vulcanization systems described hereinabove. The effects of aging at elevated temperature are determined by exposing the vulcanized elastomer in air at 150°C for a period of 70 hours, and then determining the percent retention of the original tensile strength and elongation. Another measure of resistance to aging is compression set, determined after aging for 70 hours at 150°C.

The amount of metal salt added to the thiodiethanol polymer will generally be dependent on the degree of malodor of the polymer or thermal instability of the elastomer and the particular metal salt used. Not all of the metal salts are equally effective in reducing malodor nor are all the copper salts equivalent in their ability to increase thermal stability. In general, from about 0.05 to about 10.0 parts of metal salt per hundred parts of the thiodiethanol polymer being exemplary. Preferably, the amount of metal salt will range from about 0.1 to about 7.0 part, per hundred, of polymer or from about 0.2 to about 7.0 parts, per hundred of vulcanizable elastomer. Mixtures of the salts at a concentration of the mixture within the above range may also be used.

The following examples are set forth by way of illustration only. All parts and percentages are by weight unless otherwise specified.

Examples 1 & 2

A hydroxyl-terminated macroglycol having a molecular weight of about 2000 and prepared by the auto-condensation of thiodiethanol in the presence of phosphorous acid, was analyzed and found to contain 0.19 percent thioxane and 0.027 percent dithiane. The macroglycol was slightly malodorous. Separate portions of the macroglycol were mixed at 50—60°C with (1) 0.3 percent, by weight, of mercuric chloride and (2) 0.15 percent, by weight, of cuprous chloride (both as aqueous solutions). The salt solutions were thoroughly mixed into the macroglycol and the macroglycol was then dehydrated under vacuum. Malodor was markedly reduced. Analyses of the polymers gave the following results:

| Treatment | Control blank | Example 1 0.3% $HgCl_2$ | Example 2 0.15% CuCl |
|---|---|---|---|
| % thioxane | 0.19 | 0.097 | 0.015 |
| % dithiane | 0.027 | 0.038 | 0.019 |
| odor | slight | none | none |

The data show that CuCl and $HgCl_2$ are very effective in reducing odor and that thioxane is the principal malodorous compound.

Examples 3—6

A homopolymer of thiodiethanol (0.41 mole), prepared by auto-condensation in the presence of 0.2% phosphorous acid catalyst, was mixed with 0.15 mole of thiodiethanol monomer and further condensed to give a macroglycol having a molecular weight of about 1300. The macroglycol was stirred at 90—100°C with 0.2% calcium oxide to neutralize the acid catalyst and 5% water for 3 hours. After removal of residual low-molecular-weight compounds, which are malodorous, by steam distillation at 180°C, the macroglycol was dried under vacuum at 100—120°C. To separate portions of the macroglycol (which remains malodorous) was added 0.08% of each of the following metal salts (as aqueous solutions):

Example 3. Cupric chloride ($CuCl_2$)
Example 4. Cupric sulfate ($CuSO_4$)
Example 5. Nickel chloride ($NiCl_2$)
Example 6. Ferric chloride ($FeCl_3$)

Vacuum was again applied to remove the water. The resulting macroglycols exhibited a marked reduction in malodor.

The macroglycols were then reacted with methylenebis (phenylisocyanate) at a NCO/OH ratio of about 2.43/1 to give isocyanate-terminated prepolymers having significantly reduced odor when compared to those having no metal salt therein.

Example 7

A homopolymer of thiodiethanol was prepared in the presence of 0.2% phosphorous acid and the catalyst then neutralized with calcium oxide in the manner described in Example 3. The polymer was distinctly malodorous. To 90 ml of the viscous macroglycol was added a mixture of 0.5 of zinc chloride and

0.5 part of hydrated cupric chloride. The mixture was heated at 105°C for 2 hours, then 4 ml of water was added at 70°C. The temperature was raised to ~100°C and a vacuum was applied to remove the water. The odor of the macroglycol was substantially improved.

Example 8

Cuprous chloride (0.3 part) was mixed with 75 ml of the macroglycol of Example 7 and heated for about 2.5 hours at 105°C. No water was added to the mixture, the cuprous chloride being only partially soluble in the macroglycol. The undissolved fraction of CuCl was filtered off. The odor of the macroglycol was improved.

Example 9

Example 8 was repeated except that 5 ml of water was added to help dissolve the salt. The mixture was dried under vacuum for about 30 minutes. The odor of the macroglycol was remarkably improved. In both Examples 8 and 9, a slight discoloration was imparted to the macroglycol.

Examples 10 & 11

Following the procedure of Example 7, 0.44 part of (10) cupric chloride was added to 75 ml of polythiodiethanol along with 5 ml of water. The mixture was heated at 105°C for 1.5 hours and then dried under vacuum. The reduction in odor was greater than with cuprous chloride and there was no discoloration.

Similar results were obtained when 0.5 part of (11) cupric sulfate and 5 ml of water were added.

Examples 12 & 13

Following the procedure of Example 7, 0.3 part of (12) ferric chloride and 4 ml of water were added to the polymer. A slight yellow discoloration was imparted but odor was greatly reduced. Similar odor reduction was achieved by the addition of 0.3 part of (13) cupric acetate plus 3 ml of water.

Examples 14—17

Following the procedure of Example 7, one part of (14) cupric bromide in 10 ml of water was added to the polymer. The resulting polymer had reduced odor. Similar results were obtained using one part of (15) cadmium chloride in 10 ml of water; one part of (16) silver nitrate in 8.5 ml of water; and 0.5 part of (17) copper stearate in 9 ml of benzene.

Example 18

1,4-Butanediol (4 moles) was mixed with 0.1 percent by weight of cupric acetate monohydrate and heated at about 110°C until the salt dissolved. Then, one mole of polythiodiethanol (mol wt 2000) was added and the mixture of diols stirred at 100°C for about 15 minutes. To this mixture was added 5.2 moles of methylenebis (phenylisocyanate) and the mixture stirred for a short time. Stannous octoate (0.1%) catalyst was added, stirred in for about 15 seconds, and the mixture transferred to trays having a non-stick surface and cured for one hour at 120°C. The cured thermoplastic was granulated and injection molded (barrel temperature 199°C (390°F), front 204°C (400°F), center 210°C (410°F) at the die). There was no malodor evident during or after the molding operation. Polymer prepared in the absence of the cupric salt had an intolerable odor.

Example 19

A polymer of 77% thiodiethanol — 15 % diethylene glycol — 8% trimethylol propane monoallyl ether having a molecular weight of about 2000 and prepared at a temperature of about 190°C in the presence of 0.25% phosphorous acid, was mixed with 0.04% sulfuric acid (as a 4M solution) and condensed at 190°C and 5 mm until the desired elastomeric gum was obtained. The gum was cooled to about 150°C and 0.5% cuprous chloride was added (based on the weight of the polymer) as an anhydrous powder. The gum was mixed at about 150—170°C for about 15 minutes and then under vacuum for about 0.5 hour. When the gum was discharged from the mixer, there was very little odor detectable. Similar results were obtained using 0.9% cupric chloride. A similar gum, prepared without the metal salt treatment, was highly malodorous.

Examples 20—30

When the procedure of Example 19 was again followed except that the cuprous chloride was replaced by equivalent amounts of (20) cobaltous acetate, (21) zinc oxide, (22) nickel carbonate, (23) cupric sulfide, (24) cobalt acetyl acetonate, (25) cobalt ethyl acetoacetate, (26) silver chloride, (27) cadmium sulfate, (28) ferrous nitrate, (29) cupric oxide, and (30) zinc sulfide, a definite reduction of the malodorous nature of the gum was achieved as compared to the gum having no added salt.

Example 31

A portion of the elastomer of Example 19 (100 parts) to which contains 0.5% of cuprous chloride was compounded with 50 parts of carbon black, 5 parts of calcium oxide, one part of sulfur, 2 parts of triethylene tetramine stearate, and one part of decahydropyrazino [2,3-b]pyrazine. The compounded elastomer was

cured for 30 minutes at 176°C, then post-cured for 16 hours at 120°C in an air oven. Separate specimens were air-aged for 70 hours at 150°C and compared to the elastomer containing no copper salt. The following properties were obtained:

| | Control (no CuCl) | | | 0.5% CuCl | | |
|---|---|---|---|---|---|---|
| | Original | Aged | % Retention | Original | Aged | % Retention |
| Tensile, (psi)<br>kPa | (1525)<br>10515 | (790)<br>5447 | 52 | (1500)<br>10342 | (1310)<br>9032 | 88 |
| Elongation, % | 260 | 90 | 35 | 275 | 150 | 55 |
| Compression Set, %<br>(70 hrs @ 150°C) | — | 80 | — | — | 55 | — |

The data illustrate that cuprous chloride retards deterioration of the elastomer on aging, as evidenced by a high retention of tensile and elongation properties and reduced compression set compared with the control containing no cuprous chloride.

Examples 32—34

To portions of the elastomer of Example 19 (100 parts), are added the following copper salts: (32) cuprous bromide — 0.725 part, (33) cuprous sulfide — 0.4 part, and (34) cuprous thiocyanate — 1.0 part, by compounding in the manner of Example 31. Compression set properties, determined after exposure for 70 hours at 150°C, are as follows:

| | Compression set, % |
|---|---|
| Control | 80 |
| Example 32 | 51 |
| Example 33 | 45 |
| Example 34 | 54 |

The data illustrate that a marked improvement in compression set is attained by incorporation of the copper salts into the elastomer.

Examples 35—43

The procedure of Examples 32—34 is followed with the following results:

| | | | % Retention | | |
|---|---|---|---|---|---|
| Example | Copper salt | % | Tensile | Elongation | Compression set, % |
| 35 | cupric phosphate | 0.63 | 65 | 40 | 65 |
| 36 | cupric formate | 0.8 | 72 | 30 | 67 |
| 37 | cupric hydroxide | 0.485 | 75 | 42 | 65 |
| 38 | cupric sulfide | 0.5 | 57 | 50 | 64 |
| 39 | cupric carbonate | 1.77 | 64 | 63 | 73 |
| 40 | cupric octoate | 1.77 | 54 | 55 | 69 |
| 41 | cupric naphthenate | 5.0 | 52 | 51 | 69 |
| 42 | copper acetyl acetonate | 1.3 | 67 | 45 | 61 |
| 43 | cupric stearate | 0.5 | 80 | 46 | — |
| Control | ———— | — | 52 | 35 | 80 |

Examples 44—51

When the procedure of Example 31 is again followed except that the copper salt employed is (44) cuprous phosphate, (45) cuprous stearate, (46) cuprous oxide, (47) cupric bromide, (48) cupric sulfate, (49) cupric acetate monohydrate, (50) cupric oxide and (51) cupric nitrate substantially equivalent results are achieved.

**Claims**

1. A composition of matter comprising a polymer of thiodiethanol having incorporated therein an effective odor reducing amount of a metal salt, or mixture of metal salts capable of complexing with the odor imparting components of said polymer; with the proviso that the sulfates of manganese, iron, cobalt, nickel, copper and zinc are excluded.

2. A composition of matter according to Claim 1, wherein said salt is a salt of a metal of Groups IB, IIB or VIII of Mendeleeff's Periodic Table of the Elements.

3. A composition of Claim 2, wherein said metal is copper, silver, nickel, zinc, cadmium, mercury, iron or cobalt.

4. A composition of any preceding claim, wherein said salt is a halide, a sulfate, a nitrate or an aliphatic carboxylic acid salt.

5. A composition of any preceding claim, wherein said polymer of thiodiethanol is represented by the formula

$$H{+}OG{+}_mOH \qquad (I)$$

wherein $+OG+$ comprises structural units (II) or randomly alternating structural units (II) and (III):

$$+OC_2H_4SC_2H_4+ \qquad (II)$$

$$+OR+ \qquad (III)$$

wherein R represents one or more radicals remaining on removal of two hydroxyl groups from saturated aliphatic linear, branched chain or cyclic diols; said polymer being characterized in that (1) m is an integer sufficient to provide in said polymer a molecular weight of up to about 8000, and (2) the molar ratio of structural units (II) to structural units (III) is not less than about 1:1.

6. A composition of any one of Claims 1—4, wherein said polymer of thiodiethanol is represented by the formula

$$H{+}OP{+}_xOH \qquad (IV)$$

wherein $+OP+$ comprises randomly alternating structural units selected from:

(A) structural units (II) and (V)

$$+OC_2H_4SC_2H_4+ \qquad (II)$$

$$+OR'+ \qquad (V)$$

wherein R' is one or more radicals remaining on removal of two hydroxyl groups from:

(a) saturated aliphatic linear, branched chain or cyclic diols, or

(b) aliphatic linear, branched chain or cyclic diols containing external unsaturation and having an allylic hydrogen atom; and

(B) structural units (II), (V) and (VI)

$$+OR''+ \qquad (VI)$$

wherein R'' is one or more radicals remaining on removal of two hydroxyl groups from a diphenolic compound; said polymers comprising structural units (A) and (B) being characterized in that (1) x is an integer sufficient to provide in said polymer an average molecular weight of at least about 8,000; (2) the molar ratio of structural units (II) to structural units (V), when the polymer comprises structural units (A), or the molar ratio of structural units (II) to the total of structural units (V) and (VI), when the polymer comprises structural units (B), is not less than about 1:1, and (3) the polymers contain from 1 to 10 mole percent of said diol (b), based on the total of all units (II), (V), and (VI) present in said polymer.

7. A method for reducing the malodor in polymers of thiodiethanol which possess a malodor which comprises incorporating therein an effective odor reducing amount of a metal salt or mixture of metal salts capable of complexing with the odor imparting components of said polymer; with the proviso that said metal salt is not manganese, iron, cobalt, nickel, copper or zinc sulfate when incorporated into a thiodiethanol polymer by a process which comprises condensing a monomer charge comprising

thiodiethanol or a major proportion of thiodiethanol with (A) one or more saturated or unsaturated aliphatic diols, or (B) one or more dihydric phenolic compounds, or (C) mixtures of (A) and (B), at a temperature in the range of 150° to 200°C, under conditions whereby water formed in the reaction is removed and in the presence of a catalyst comprising from 0.01 to 3 percent by weight, based on the weight of monomer charge, of phosphorus acid and from 0.01 to 3 percent by weight, based on the weight of monomer charge, of manganese, iron, cobalt, nickel, copper or zinc sulfate, and as a result of such incorporation of said sulfate catalyst the malodor of an otherwise malodorous thiodiethanol polymer is substantially reduced.

8. A method according to Claim 7, wherein said salt is as defined in any one of Claims 2—4.

9. The method of Claim 7 or Claim 8, wherein said polymer of thiodiethanol is as defined in Claim 5 or Claim 6.

10. A method for improving the thermal stability of a vulcanizable elastomer of thiodiethanol which comprises incorporating therein a thermal stabilizing amount of a copper salt, said elastomer of thiodiethanol being represented by the formula

$$H\!-\!\!\!+\!OH\!+\!\!\!-_{n}OH \qquad (I)$$

wherein $+OH+$ comprises a copolymer of randomly alternating structural units selected from:

(A) structural units (II) and (III)

$$+OC_2H_4SC_2H_4+ \qquad (II)$$

$$+OR+ \qquad (III)$$

wherein R represents one or more radicals remaining on removal of two hydroxyl groups from (a) aliphatic saturated linear, branched chain or cyclic diols, or (b) aliphatic linear, branched chain or cyclic diols containing external unsaturation and having an allylic hydrogen atom; and

(B) structural units (II), (III) and (IV)

$$+OR'+ \qquad (IV)$$

wherein R' represents the radical remaining on removal of two hydroxyl groups from a diphenolic compound; said copolymer comprising structural units (A) and (B) being characterized in that (1) n is an integer sufficient to provide in said copolymer a molecular weight of at least about 8000; (2) the molar ratio of structural units (II) to (III), when the polymer comprises structural units (A), or the molar ratio of structural units (II) to the total of (III) and (IV), when the polymer comprises structural units (B), is not less than about 1:1; and (3) the polymers contain from 1 to 10 mole percent of said diol (b), based on the total of all units (II), (III) and (IV) present in said polymer; with the proviso that said copper salt is not copper sulfate when incorporated into said thiodiethanol elastomer by a process comprising forming said elastomer by condensing the monomer charge at a temperature in the range of 150°—200°C, under conditions whereby water formed in the reaction is removed and in the presence of a catalyst comprising from 0.01 to 3 percent by weight, based on the weight of monomer charge, of phosphorus acid and from 0.01 to 3 percent by weight, based on the weight of monomer charge, of copper sulfate, and as a result of such incorporation of said copper sulfate catalyst the thermal stability of a thiodiethanol polymer is substantially increased.

11. The method of Claim 10, wherein said polymer of thiodiethanol comprises at least 50-mole percent thiodiethanol, 1 to 10 mole percent trimethylol propane monoallyl ether and, optionally, from 40 to 49 mole percent of one or more saturated aliphatic diols.

12. The method of Claim 11, wherein said polymer comprises 70 to 85 mole percent thiodiethanol, 5 to 29 mole percent of one or more saturated aliphatic diols, and 1 to 10 mole percent of trimethylol propane monoallyl ether.

13. The method of any one of Claims 10 to 12, wherein said copper salt is cuprous chloride, cuprous sulfide, cupric carbonate, cupric stearate or cupric octoate.

**Patentansprüche**

1. Masse, umfassend ein Polymeres von Thiodiethanol, dem eine zur Geruchsveringerung wirksame Menge eines Metallsalzes einverleibt ist oder eine Mischung von Metallsalzen mit der Fähigkeit zur Komplexbilding mit geruchserzeugenden Komponenten des Polymeren, mit der Maßgabe, daß die Sulfate von Mangan, Eisen, Kobalt, Nickel, Kupfer und Zinc ausgeschlossen sind.

2. Masse nach Anspruch 1, dadurch gekennzeichnet, daß es sich bei dem Salz um ein Salz eines Metalls der Gruppen IB, IIB oder VIII des periodischen Systems der Elemente nach Mendeleeff handelt.

3. Masse nach Anspruch 2, wobei das Metall Kupfer, Silber, Nickel, Zink, Cadmium, Quecksilber, Eisen oder Kobalt ist.

4. Masse nach einem der vorstehenden Ansprüche, wobei das Salz ein halogenid, ein Sulfat, ein Nitrat oder das Salz einer aliphatischen Carbonsäure ist.

5. Masse nach einem der vorstehenden Ansprüche, wobei das Polymere des Thiodiethanols durch die folgende Formel dargestellt ist

$$H\{OG\}_{m}OH \qquad (I)$$

wobei $\{OG\}$ für Struktureinheiten (II) steht oder wahlos alternierende Struktureinheiten (II) und (III) umfaßt.

$$\{OC_2H_4SC_2H_4\} \qquad (II)$$

$$\{OR\} \qquad (III)$$

wobei R für ein oder mehrere Radikale steht, die bei Entfernung von zwei Hydroxylgruppen von gesättigten aliphatischen linearen, verzweigtkettigen oder zyklischen Diolen zurückbleiben; wobei das Polymere dadurch gekennzeichnet ist, daß (1) m für eine ganze Zahl steht, die ausreicht, um bei dem Polymeren ein Molekulargewicht von bis zu etwa 8000 zu schaffen und (2) das Molverhältnis der Struktureinheiten (II) zu den Struktureinheiten (III) nicht kleiner als etwa 1:1 ist.

6. Masse nach einem der Ansprüche 1 bis 4, wobei das Polymere des Thiodiethanols durch die folgende Formel ausgedrückt ist

$$H\{OP\}_{x}OH \qquad (IV)$$

wobei $\{OP\}$ für wahllos alternierende Struktureinheiten steht, ausgewählt aus:
(A) Struktureinheiten (II) und (V)

$$\{OC_2H_4SC_2H_4\} \qquad (II)$$

$$\{OR'\} \qquad (V)$$

wobei R' für ein oder mehrere Radiakle steht, die zurückbilden bei Entfernung von zwei Hydroxylgruppen von
(a) gesättigten aliphatischen linearen, verzweigtkettigen oder zyklischen Diolen oder
(b) aliphatischen linearen, verzweigtkettigen oder zyklischen Diolen mit einer externen Unsättigung und mit einem allylischen Wasserstoffatom; und
(B) Struktureinheiten (II), (V) und (VI)

$$\{OR''\} \qquad (VI)$$

wobei R'' für ein oder mehrere Radikale steht, die bei Entfernung von zwei Hydroxylgruppen von einer diphenolischen Verbindung übrigbleiben; wobei die Struktureinheiten (A) und (B) umfassenden Polymere dadurch gekennzeichnet sind, daß (1) x für eine ganze Zahl steht, die ausreicht, um bei dem Polymeren ein durchschnittliches Molekulargewicht von mindestens etwa 8.000 zu gewährleisten; (2) das Molverhältnis der Struktureinheiten (II) zu den Struktureinheiten (V), im Falle daß das Polymere Struktureinheiten (A) umfaßt, oder das Molverhältnis der Struktureinheiten (II) zu der Gesamtmenge der Struktureinheiten (V) und (VI) im Falle daß das Polymere Struktureinheiten (B) umfaßt, nicht kleiner ist als etwa 1:1 und (3) die Polymere von 1 bis 10 Mol-% des genannten Diols (b) enthalten, bezogen auf die Gesamtmenge aller in dem Polymer vorliegenden Einheiten (II), (V) und (VI).

7. Verfahren zur Verminderung des üben Geruchs bei schlecht riechenden Polymeren von Thiodiethanol, umfassend die Einverleibung einer zur Geruchsverminderung wirksamen Menge eines Metallsalzes oder einer Mischung von Metallsalzen mit der Fähigkeit der Komplexbildung mit den geruchserzeugenden Komponenten des Polymeren, mit der Maßgabe, daß es sich bei dem Metallsalz nicht um Mangan-, Eisen-, Kobalt-, Nickel-, Kupfer- oder Zinksulfat handelt, wenn es dem Thiodiethanolpolymeren einverleibt wird nach einem Verfahren, umfassend die Kondensation einer Monomercharge, umfassend Thiodiethanol oder eine Hauptmenge an Thiodiethanol mit (A) einem oder mehreren gesättigten oder ungesättigten aliphatischen Diolen oder (B) einem oder mehreren zweiwertigen phenolischen Verbindungen oder (C) Mischungen von (A) und (B) bei einer Temperatur im Bereich von 150 bis 200°C unter Bedingungen, bei denen das im Verlauf der Reaktion gebildete Wasser entfernt wird und in Gegenwart eines Katalysators, der von 0,01 bis 3 Gewichts-%, bezogen auf das Gewicht der Monomercharge Phosphorsäure enthält und von 0,01 bis 3 Gew.-%, bezogen auf das Gewicht der Monomercharge, Mangan-, Eisen-, Kobalt-, Nickel-, Kupfer- oder Zinksulfat und wobei als Folge einer derartigen Einverleibung des Sulfatkatalysators der üble Geruch eines sonst übelriechenden Dithioethanolpolymeren wesentlich verringert ist.

8. Verfahren gemäß Anspruch 7, wobei das Salz die einem der Ansprüche 2 bis 4 angegebene Definition hat.

9. Verfharen nach Anspruch 7 oder Anspruch 8, wobei das Polymere des Thiodiethanols wie in Anspruch 5 oder in Anspruch 6 definiert ist.

10. Verfahren zur Verbesserung der thermischen Stabilität eines vulkanisierbaren Elastomeren des Thiodiethanols, umfassend die Einverleibung einer thermisch stabilisierenden Menge eines Kupfersalzes, wobei das Elastomere des Thiodiethanols die folgende Formel aufweist

$$H{+}OH{+}_nOH \qquad (I)$$

wobei $+OH+$ für eine Copolymeres von wahllos alternierenden Struktureinheiten steht, ausgewählt aus:
(A) Struktureinheiten (II) und (III)

$$+OC_2H_4SC_2H_4+ \qquad (II)$$

$$+OR+ \qquad (III)$$

wobei R für ein oder mehrere Radikale steht, die übrigbleiben bei Entfernung von zwei Hydroxylgruppen von (a) aliphatischen gesättigten linearen, verzweigtkettigen oder zyklischen Diolen, oder (b) aliphatischen linearen, verweigtkettigen oder zyklischen Diolen mit externen Unsättigung und mit einem allylischen Wasserstoffatom; und
(B) Struktureinheiten (II), (III) und (IV)

$$+OR'+ \qquad (IV)$$

wobei R' für einen Rest steht, der übrigbleibt bei Entfernung von zwei Hydroxylgruppen von einer diphenolischen Verbindung; wobei das die Struktureinheiten (A) und (B) umfassende Copolymere dadurch gekennzeichnet ist, daß (1) n für eine ganze Zahl steht, die ausreicht, um bei dem Copolymeren ein Molekulargewicht von mindestens etwa 8000 zu schaffen; (2) das Molverhältnis der Strukturheiten (II) zu (III), falls das Polymere Struktureinheiten (A) umfaßt oder das Molverhältnis der Struktureinheiten (II) zu der Gesamtmenge von (III) und (IV), falls das Polymere Struktureinheiten (B) umfaßt, nicht kleiner ist als etwa 1:1; und (3) die Polymere von 1 bis 10 Mol-% des genannten Diols (b) enthalten, bezogen auf die Gesamtmenge aller in dem Polymeren vorliegenden Einheiten (II), (III) und (IV), mit der Maßgabe, daß es sich bei dem Kupfersalz nicht um Kupfersulfat handelt, wenn man es dem Thiodiethanolelastomeren einverleibt nach einem Verfahren, welches die Bildung des Elastomeren durch Kondensation der Monomercharge bei einer Temperatur im Bereich von 150—200°C unter Bedingungen umfaßt, bei denen das bei der Reaktion gebildete Wasser entfernt wird und in Gegenwart eines Katalysators, umfassend von 0,01 bis 3 Gewichts-%, bezogen auf das Gewicht der Monomercharge, Phosphorsäure und von 0,01 bis 3 Gewichts-%, bezogen auf das Gewicht der Monomercharge, Kupfersulfat und wobei als Folge einer derartigen Einverleibung des Kupfersulfatkatalysators die thermische Stabilität eines Thiodiethanolpolymeren wesentlich gesteigert wird.

11. Verfahren nach Anspruch 10, wobei das Polymere des Thiodiethanols mindestens 50 Mol-% Thiodiethanol, 1 bis 10 Mol-% Trimethylolpropanmonoallyläther und gegebenenfalls von 40 bis 49 Mol-% ein oder mehrere gesättigte aliphatische Diole umfaßt.

12. Verfahren nach Anspruch 11, wobei das Polymere 70 bis 85 Mol-% Thiodiethanol, 5 bis 29 Mol-% ein oder mehrere gesättigte aliphatische Diole und 1 bis 10 Mol-% Trimethylolpropanmonoallyläther umfaßt.

13. Verfahren nach einem der Ansprüche 10 bis 12, wobei das Kupfersalz Cuprochlorid, Cuprosulfid, Cupricarbonat, Cupristearat oder Cuprioctoat ist.

**Revendications**

1. Composition de matière comprenant un polymère du thiodiéthanol dans lequel est incorporée une quantité, réduisant efficacement l'odeur, d'un sel métallique ou d'un mélange de sels métalliques capables de former des complexes avec les composants dudit polymère qui confèrent de l'odeur; avec la restriction que les sulfates de manganèse, de fer, de cobalt, de nickel, de cuivre et de zinc sont exclus.

2. Composition de matière selon la revendication 1, dans laquelle ledit sel est un sel d'un métal appartenant aux groupes IB, IIB ou VIII du tableau périodique des éléments de Mendeléeff.

3. Composition selon la revendication 2, dans laquelle ledit métal est le cuivre, l'argent, le nickel, le zinc, le cadmium, le mercure, le fer ou le cobalt.

4. Composition selon l'une quelconque des revendications précédentes, dans laquelle ledit sel est un halogénure, un sulfate, un nitrate ou un sel d'acide carboxylique aliphatique.

5. Composition selon l'une quelconque des revendications précédentes, dans laquelle ledit polymère du thiodiéthanol est représenté par la formule

$$H{+}OG{+}_mOH \qquad (I)$$

dans laquelle $+OG+$ comprend des unités structurales (II) ou des unités structurales (II) et (III) alternant au hasard

$$-\!\!\!+\!OC_2H_4SC_2H_4\!+\!\!\!- \qquad \text{(II)}$$

$$-\!\!\!+\!OR\!+\!\!\!- \qquad \text{(III)}$$

où R représente un ou plusieurs radicaux restant après l'enlèvement de deux groupes hydroxyle de diols aliphatiques saturés à chaîne droite ou ramifiée, ou cycliques; ledit polymère étant caractérisé par le fait que (1) m est un nombre entier suffisamment élevé pour donner au dit polymère un poids moléculaire allant jusqu'à environ 8000, et que (2) le rapport molaire entre les unités structurales (II) et les unités structurales (III) n'est pas inférieur à environ 1:1.

6. Composition selon l'une quelconque des revendications 1 à 4, dans laquelle ledit polymère du thiodiéthanol est représenté par la formule

$$H\!+\!OP\!+_{x}OH \qquad \text{(IV)}$$

dans laquelle —OP— comprend des unités structurales alternant au hasard, choisies parmi:
(A) des unités structurales (II) et (V)

$$-\!\!\!+\!OC_2H_4SC_2H_4\!+\!\!\!- \qquad \text{(II)}$$

$$-\!\!\!+\!OR'\!+\!\!\!- \qquad \text{(V)}$$

où R' est un ou plusieurs radicaux restant après l'enlèvement de deux groupes hydroxyle de:
(a) diols aliphatiques saturés à chaîne droite ou ramifiée, ou cycliques, ou
(b) diols aliphatiques à chaîne droite ou ramifiée, ou cycliques, contenant une insaturation externe et ayant un atome d'hydrogène allylique; et
(B) des unités structurales (II), (V) et (VI)

$$-\!\!\!+\!OR''\!+\!\!\!- \qquad \text{(VI)}$$

où R'' est un ou plusieurs radicaux restant après l'enlèvement de deux groupes hydroxyle d'un composé diphénolique; lesdits polymères comprenant des unités structurales (A) et (B) étant caractérisés par le fait que (1) x est un nombre entier suffisamment élevé pour donner au dit polymère un poids moléculaire moyen d'au moins environ 8000; que (2) le rapport molaire entre les unités structurales (II) et les unités structurales (V) lorsque le polymère comprend les unités structurales (A), ou le rapport molaire entre les unités structurales (II) et la somme des unités structurales (V) et (VI), lorsque le polymère comprend les unités structurales (b), ne sont pas inférieures à environ 1:1, et que (3) les polymères contiennent de 1 à 10 pour cent en moles dudit diol (b), rapporté à la somme de toutes les unités (II), (V) et (VI) présentes dans ledit polymère.

7. Procédé pour la réduction de la mauvaise odeur dans des polymères du thiodiéthanol possédant une mauvaise odeur, qui comprend l'incorporation à ceux-ci d'une quantité, réduisant efficacement l'odeur, d'un sel métallique ou d'un mélange de sels métalliques capables de former des complexes avec les composants dudit polymère qui confèrent de l'odeur; avec la restriction que ledit sel métallique n'est pas le sulfate de manganèse, de fer, de cobalt, de nickel, de cuivre ou de zinc, lorsqu'il est incorporé à un polymère du thiodiéthanol par un procédé qui comprend la condensation d'un matériau monomère comprenant du thiodiéthanol ou constitué en majeure partie de thiodiéthanol avec (A) un ou plusieurs diols aliphatiques saturés ou non saturés, ou (B) un ou plusieurs composés phénoliques dihydriques ou (C) des mélanges de (A) et de (B) à une température allant de 150° à 200°C, dans des conditions dans lesquelles l'eau formée au cours de la réaction est chassée, et en présence d'un catalyseur comprenant de 0,01 à 3 pour cent en poids, rapporté au poids du matériau monomère, d'acide phosphoreux, et de 0,01 à 3 pour cent en poids, rapporté au poids du matériau monomère, de sulfate de manganèse, de fer, de cobalt, de nickel, de cuivre ou de zinc, et qu'en conséquence d'une telle incorporation dudit catalyseur constitué de sulfate, la mauvaise odeur d'un polymère du thiodiéthanol, sans cela malodorant, est considérablement réduite.

8. Procédé selon la revendication 7, dans lequel ledit sel est tel qu'il est défini dans l'une quelconque des revendications 2 à 4.

9. Procédé de la revendication 7 ou de la revendication 8, dans lequel ledit polymère du thiodiéthanol est tel qu'il est défini dans la revendication 5 ou dans la revendication 6.

10. Procédé pour l'amélioration de la résistance à la chaleur d'un élastomère vulcanisable du thiodiéthanol, qui comprend l'incorporation à celui-ci d'une quantité, améliorant la résistance à la chaleur, d'un sel de cuivre, ledit élastomère du thiodiéthanol étant représenté par la formule

$$H\!+\!OH\!+_{n}OH \qquad \text{(I)}$$

dans laquelle $-\!\!\!+\!OH\!+\!\!\!-$ comprend un copolymère d'unités structurales alternant au hasard, choisies parmi:

(A) les unités structurales (II) et (III)

$$-\!\!\!+\!OC_2H_4SC_2H_4\!+\!\!\!- \qquad (II)$$

$$-\!\!\!+\!OR\!+\!\!\!- \qquad (III)$$

où R représente un ou plusieurs radicaux restant après l'enlèvement de deux groupes hydroxyle de (a) diols aliphatiques saturés à chaîne droite ou ramifiée, ou cycliques, ou (b) diols aliphatiques à chaîne droite ou ramifiée, ou cycliques, contenant une insaturation externe et ayant un atome d'hydrogène allylique; et

(B) les unités structurales (II), (III) et (IV)

$$-\!\!\!+\!OR'\!+\!\!\!- \qquad (IV)$$

où R' représente le radical restant après l'enlèvement de deux groupes hydroxyle d'un composé diphénolique; ledit copolymère comprenant les unités structurales (A) et (B) étant caractérisé par le fait que (1) n est un nombre entier suffisamment élevé pour donner au dit copolymère un poids moléculaire d'au moins environ 8000; (2) que le rapport molaire entre les unités structurales (II) et (III), lorsque le polymère comprend les unités structurales (II) et la somme de (III) et (IV), lorsque le polymère comprend les unités structurales (B), ne sont pas inférieures à environ 1:1; et (3) que les polymères contiennent de 1 à 10 pour cent en moles du dit diol (b), rapporté à la somme de toutes les unités (II), (III) et (IV) présentes dans ledit polymère; avec la restriction que ledit sel de cuivre n'est pas du sulfate de cuivre lorsqu'il est incorporé au dit élastomère du thiodiéthanol par un procédé comprenant la formation dudit élastomère par condensation d'un matériau monomère à une température comprise entre 150 et 200°C, dans des conditions dans lesquelles l'eau formée au cours de la réaction est chassée, et en présence d'un catalyseur comprenant de 0,01 à 3 pour cent en poids, rapporté au poids du matériau monomère, d'acide phosphoreux, et de 0,01 à 3 pour cent en poids, rapporté au poids du matériau monomère, de sulfate de cuivre, et qu'en conséquence d'un telle incorporation dudit catalyseur constitué de sulfate de cuivre, la résistance à la chaleur du polymère du thiodiéthanol est considérablement augmentée.

11. Procédé selon la revendication 10, dans lequel le dit polymère du thiodiéthanol comprend au moins 50 pour cent en moles de thiodiéthanol, 1 à 10 pour cent en moles d'éther monoallylique de triméthylol-propane et, éventuellement, de 40 à 49 pour cent en moles d'un ou plusieurs diols aliphatiques saturés.

12. Procédé selon la revendication 11, dans lequel ledit polymère comprend de 70 à 85 pour cent en moles de thiodiéthanol, 5 à 29 pour cent en moles d'un ou plusieurs diols aliphatiques saturés et de 1 à 10 pour cent en moles d'éther monoallylique de triméthylol-propane.

13. Procédé selon l'une quelconque des revendications 10 à 12, dans lequel ledit sel de cuivre est le chlorure cuivreux, le sulfure cuivreux, le carbonate cuivrique, le stéarate cuivrique ou l'octanoate cuivrique.